**Europäisches Patentamt**

**European Patent Office**

**Office européen des brevets**

(11) Publication number: **0 116 279**
**B1**

(12) **EUROPEAN PATENT SPECIFICATION**

(45) Date of publication of patent specification: **06.05.87**

(51) Int. Cl.⁴: **B 60 N 1/02**

(21) Application number: **84100156.3**

(22) Date of filing: **09.01.84**

(54) Seat support device particularly for a vehicle.

(30) Priority: **18.01.83 IT 6704283**

(43) Date of publication of application:
**22.08.84 Bulletin 84/34**

(45) Publication of the grant of the patent:
**06.05.87 Bulletin 87/19**

(84) Designated Contracting States:
**DE FR GB SE**

(56) References cited:
**DE-A-2 448 139**
**FR-A-2 135 828**
**FR-A-2 500 383**
**GB-A-1 574 372**
**US-A-3 899 151**
**US-A-3 961 767**

(73) Proprietor: **FIAT AUTO S.p.A.**
**Corso Giovanni Agnelli 200**
**I-10135 Torino (IT)**

(72) Inventor: **Fantini, Marco**
**Corso Einaudi, 3**
**I-10100 Torino (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

This invention relates to a seat support device, in particular for a motor vehicle seat, and in particular for a front seat. Seat support devices, in particular for motor vehicles, comprise a pair of guides rigid with the seat support structure, and a pair of rails formed in one piece with and/or fixed rigidly to the floor of the vehicle body. The rails are arranged to slidably house the guides in order to connect the seat to the floor while at the same time allowing it to be moved along the floor parallel to the guides to enable the vehicle user to position the seat according to his own requirements.

Such devices have usually the drawbacks of requiring a relatively complex assembly of the seat on the vehicle, which does not allow the seat to be mounted automatically due to the too complex movements involved, and/or to be of relatively complex construction and of difficult disassembly. For example, in order to allow the seats to be automatically assembled on the vehicle, the U.S. Patent n° 3,961,767 describes a support device in which the rails are separated from the vehicle floor, to which they can be secured by means of bolts or other connection elements; particularly, the rails are preassembled on the seat guides and are provided one with a lateral appendix and the other with means (another appendix) for engaging the connection elements. The lateral appendix engages with a seat rigid with the vehicle floor and defined by a U-shaped bracket. This device is effective in order to allow the assembly to be carried out automatically, but nevertheless is not completely safe and reliable and is of difficult disassembly in the case of damages to the rails. In fact the majority of the operational stresses are discharged on the seat defined by the U-shaped bracket, while the latter has a shape that is not adapted to support high flexional stresses; therefore breaking in operation may be possible unless a massive construction of the bracket is provided, with accordingly a considerable increase in the vehicle weight. Moreover, for ensuring the locking of the appendix into the U-shaped brackets a tilting mechanism comprising a rotatable S-shaped plate member and stop members is necessary; this mechanism is supported by the appendix and make the construction of the entire device relatively complex as well as its weight relatively high; furthermore the plate member, after assembly, remains fitted between the floor and the stop-members in such a manner that it has to be moved manually in order to allow the disassembly of the seat from the vehicle, so that the disassembly is relatively complex and, above all, dangerous for the operator, that can injury himself. Another known support device is described in the US Patent n° 3,899,151; also in this case the rails are demountable from the vehicle floor and their assembly is ensured by lateral appendices perpendicular to the guides and adapted to engage seats rigid with the vehicle floor and defined by vertical slots provided in a L-shaped support. Also this second device present the drawbacks of that of US 3,961,767; in fact the appendices are highly stressed inside the slots, as well as the L-shaped support due to the limited surface of contact through which the stresses can be retransmitted, and the assembly and disassembly are made complex and difficult by the necessity of locking the appendices inside the slots by means of sliding locks that have to be manually operated with danger for the operator and that increase the weight of the support device. The object of the present invention is to provide a seat support device according to the first portion of claim 1 of the type described in the US Patent 3,961,767, i.e. able to allow a easy automatic assembly to be carried out, but free from the described drawbacks of the latter, i.e. able to be disassembled easily, without risks for the operator, of simple construction, being substantially free of movable parts, and of low weight and high mechanical resistance.

According to the present invention said object is characterized in that, in combination, said seat consists in a substantially hollow parallelepiped housing and said appendix is perpendicular to said rail and comprises at least one oblique surface such that it can be wedged into said housing, said means for engaging said connection element comprising a slot adapted to allow said seat to be adjusted laterally perpendicular to said guide with said appendix engaged inside said housing.

The present invention will be more apparent from the non-limiting description given hereinafter of one embodiment thereof with reference to the accompanying drawings, on which:

Figure 1 is a side view of a seat provided with a support device constructed in accordance with the present invention;

Figure 2 is a section on the line II—II through the seat of Figure 1;

Figure 3 and 4 are two different details of the seat of Figures 1 and 2 to an enlarged scale;

Figure 5 is a section on the line V—V through the detail of Figure 4;

Figure 6 illustrates one stage of the method for mounting the seat of Figures 1 and 2.

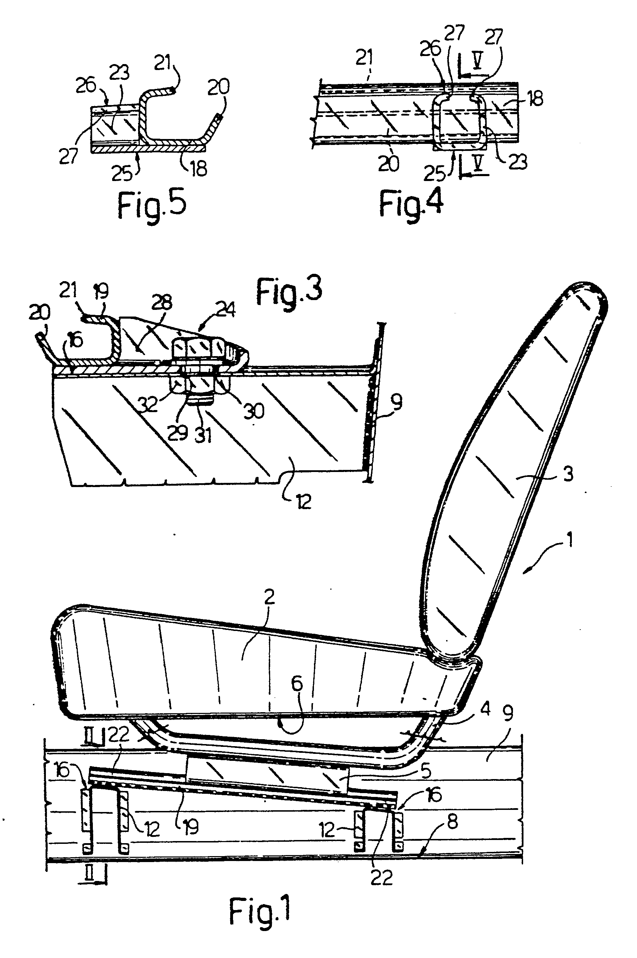

In Figures 1 and 2, the reference numeral 1 indicates overall a seat, in particular a motor vehicle front seat, comprising a seat portion 2 and a back portion 3 which are supported by a rear structure 4 fitted with a pair of parallel straight guides 5 disposed below the seat portion 2 on opposite sides, 6 and 7 respectively, of the seat 1. The guides 5 are rigidly fixed to the support structure 4, and in a preferred embodiment are of plastics construction, for example directly moulded on to the structure 4. The seat 1 is fixed by the guides 5 to a substantially flat floor 8 which in the example illustrated forms part of the body 9 of a vehicle, not shown.

The floor 8 is provided with two pairs of support brackets, namely inner brackets 10 disposed in proximity to a central raised portion 11 of the floor 8 of the body 9, and other brackets 12 disposed in proximity to that lower outer edge 13 of the body 9 which lowerly defines the space, not shown, which is designed to receive the vehicle doors. The brackets 10, front and rear respectively, are constructed of bent plate welded to the floor 8, and each has and upper support surface 14 and a substantially hollow parallelepiped housing 15 of predetermined depth. The brackets 12, front and rear respectively, face the corresponding brackets 10 and are also constructed of bent plate welded to the floor 8, and comprise an upper support surface 16 parallel to the surface 14. An inner straight rail 18 and an outer straight rail 19 are disposed longitudinally parallel to each other on the surfaces 14 and 16 of the pairs of brackets 10 and 12 respectively, and are arranged to slidably house the guides 5, which are parallel to them. The rail 18 is specular and symmetrical to the rail 19 which is shown to an enlarged scale in cross-section in Figure 3, the rail 18 being shown to an enlarged scale in Figures 4 and 5.

With reference to Figures 3, 4 and 5, the rails 18 and 19 are of metal plate construction, are straight, and have a channel configuration. They are provided with facing side edges 20 and with upper edges 21 which are bent towards each other and arranged to cooperate with the guides 5 in order to prevent these latter from withdrawing laterally or upwardly from the rails 18 and 19, into which the guides 5 are inserted by sliding them parallel to their axis starting from one or other of the two ends 22 of the rails 18 and 19. These latter, by cooperating with the guides 5, are therefore able to constrain the seat 1 to the floor 8, while at the same time allowing said seat 1 to move parallel to the floor 8 in a predetermined direction parallel to the rails 18 and 19.

The rails 18 and 19 are removably and substantially rigidly fixed to the floor 8 by the brackets 10 and 12 and suitable disengageable fixing means comprising at least one rigid appendix 23 fixed rigidly to one of the rails 18 or 19 and arranged to cooperate with the seat 15, and at least one demountable connection element 24 (for example a bolt, a screw, a pressure clip etc.) arranged to connect the other of the rails 18 or 19 to the floor 8 and/or the brackets 10 and 12. Specifically, in the illustrated example the rail 18 is provided with two parallel lateral appendices 23 perpendicular to the rail 18 and facing the central raised portion 11, and provided with lower support surfaces 25 arranged to cooperate with the surfaces 14 of the brackets 10, in correspondence with which the appendices 23 are disposed. The appendices 23 are welded to the rail 18, are constructed of U-bent plate, are of substantially parallelepiped shape and are arranged to fit by insertion into the corresponding housings 15 provided in the pair of brackets 10, on which the appendices 23 are arranged to rest. Finally, each appendix 23 comprises at least one oblique surface 26, which in the illustrated example is defined by bent edges 27 of said appendix 23, and which is arranged for insertion-wedging into the respective housing 15, as to lock the relative appendix 23 in this latter substantially without slack.

In contrast, the rail 19 is provided with two brackets 28 in positions corresponding with the pair of brackets 12 laterally and perpendicularly to the rail 19 on that side thereof opposite to the side facing the appendices 23, and are arranged to rest on the surfaces 16 of the brackets 12. These latter are provided with through holes 29, corresponding with which there are provided respective slots 30 in the brackets 28. These slots and the holes 29 are arranged to house a bolt 31 which together with a nut 32 constitutes the connection element 24, which is arranged to engage both the corresponding brackets 12 and 28 in order to rigidly and demountably connect the rail 19 to the brackets 12, and consequently lock the appendices 23 in the housings 15. The aforesaid fixing system allows easy mounting and removal of the seat 1, and the replacement of the rails 18 and/or 19 in case of faults or breakage, and is of simple and economical construction and assembly. Finally, it enables the seat to be mounted on the vehicle body by a method, which can be easily and economically automated in each of its stages. This method is as follows.

The seat 1, completed on an upholstery line and fitted with the guides 5, is firstly moved into a suitable station in which the rails 18 and 19 are mounted on it. This mounting operation is carried out by positioning the rails 18 and 19 coaxially to each respective guide 5, and then sliding (by translatory movement of the seat 1 and/or of the rails 18 and 19) these latter into the rails 18 and 19 by way of one of the ends 22 of each of them. In this manner, as translatory movement is the only movement permitted to the guides 5 in the rails 18 and 19, these latter form a single preassembled unit with the seat 1 after the mounting operation. The seat 1 is obviously fitted with a known device, not shown for simplicity, which can arrest the translatory movement of the guides 5 in the rails 18 and 19 in a plurality of different positions, and which can be operated by the user of the seat 1. The described mounting operation can be carried out either manually, or automatically by fitting said station with suitable positioning locators for the seat 1 and the guides 18 and 19, with automatic feed units, and with an automatic pusher for effecting the translatory movement parallel to the guides 5 which is necessary for the mounting operation. The guides 18 and 19 obviously reach said station already fitted with the appendices 23 and brackets 28, which have been previously fixed to them.

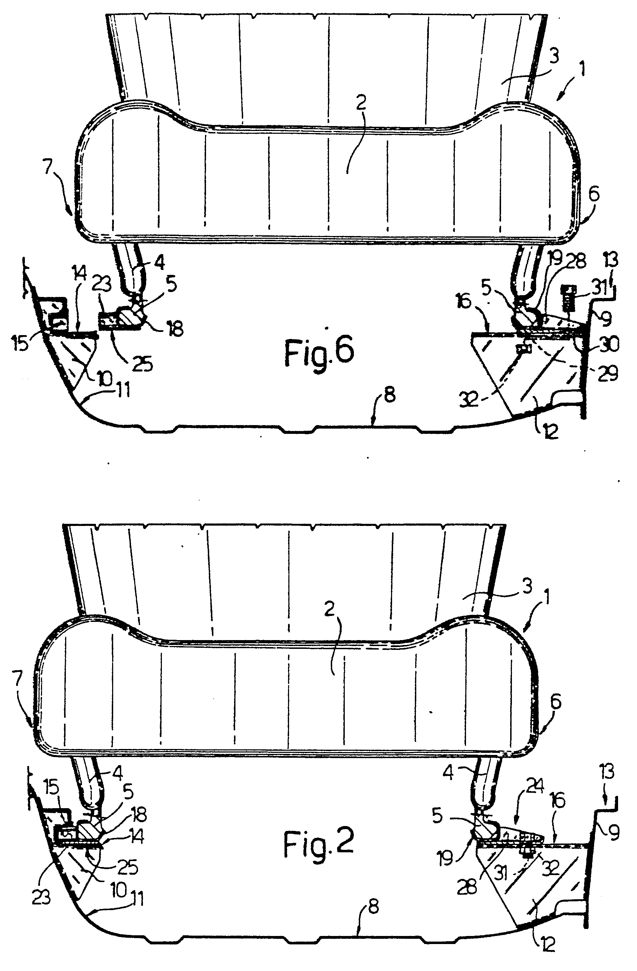

The unit formed in this manner is then moved on to an assembly line or station, for example an automatic one, which is provided with reference locators and to which bodies 9 are fed. One and/or more seats 1 are introduced into the body 9 in this station, for example through the door space, and are then positioned on the brackets 10 and 12, which have been previously fixed and welded to the floor 8 of the body 9 during the assembly of this later on the bodywork line. In the case of a front seat 1, during this stage of the mounting operations the seat 1 is presented to the interior of the body 9 in the manner illustrated in Figure 6, i.e. with the appendices 23 facing the respective housings 15 of the brackets 10, and the brackets 28 completely resting on the brackets 12 in proximity to the edge 13. In the next operation, the seat 1 thus positioned is moved manually and/or by suitable pushers (for example those which introduced it into the body 9) perpendicular to the guides 5, so that the appendices 23 become inserted into the housings 15 and the guide 18 is moved completely on to the surface 14. Consequently, by virtue of the oblique surfaces 26, the appendices 23 beome insertion-fitted in a removable manner (by reversing the direction of movement) into the housings 15, while simultaneously the brackets 28 slide on the support surface 16 until they assume a position in which the slots 30 correspond with the respective holes 29 in the brackets 12. In the final operation, a bolt 31 is inserted through each hole 29 and the respective slot 30, and is fixed to the bracket 12 by means of a nut 32, manually and/or using an automatic tightener (the nut 32 can obviously be dispensed with if the hole 29 is threaded). The bolts 31 fix the brackets 28 on to the brackets 12 to prevent further translatory movement perpendicular to the guides 5, and thus prevent the appendices 23 from emerging from the housings 15, while at the same time fixing the rail 19 to the brackets 12.

The purpose of the appendices 23 during operation is to absorb all the main stresses (for example due to acceleration, braking, sliding of the seat 1 etc.) while cooperating with the housing 15 in order to keep the seat 1 constrained to the body 9, whereas the only purpose of the bolts 31 is to prevent transverse movements of the guides 18 and 19 on the brackets 10 and 12 in order to maintain the appendices 23 in strict cooperation with the housings 15. The presence of the slot 30 enables any small constructional inaccuracies to be compensated during the mounting operation by adjusting the seat 1 perpendicular to the guides 5 by small movements before the nut and bolt element 24 is fully tightened.

Said device can obviously also be applied to a rear bench-type seat, which can be introduced through the rear doors or, using only one extra movement, through the front door spaces.

**Claims**

1. A support device for a seat (1), in particular for a motor vehicle seat, of the type comprising at least one longitudinal guide (5) mounted below and rigid with said seat (1), and at least one rail (18, 19) provided with means for fixing to a floor (8), said guide (5) being parallel to said rail (18, 19) and being slidably housed in this latter in order to constrain said seat (1) to said floor (8) while at the same time allowing said seat (1) to move parallel to said floor (8) along a predetermined direction parallel to said rail (18, 19), said fixing means comprising at least one rigid appendix (23) fixed rigidly to said rail (18) at least one seat (15) provided rigid with said floor (8) and arranged to engage said appendix (23), this latter being configured for insertion into said seat (15), at least one demountable connection element (24) for connecting said rail (19) to said floor (8), and means (28) for engaging said connection element (24), characterized in that, in combination, said seat (15) consists in a substantially hollow parallelepiped housing of a predetermined depth and said appendix (23) is perpendicular to said rail (18) and comprises at least one oblique surface (26) such that it can be wedged into said housing (15), said means (28) for engaging said connection element (24) comprising a slot (30) adapted to allow said seat (1) to be adjusted laterally perpendicular to said guide (5) with said appendix (23) engaged inside said housing (15).

2. A device as claimed in claim 1, characterized in that said floor (8) is substantially flat and forms part of a vehicle body (9).

3. A device as claimed in claim 1 or 2, characterized by comprising two guides (5) slidably mounted in two said rails (18, 19), said guides (5) being parallel to each other and disposed below and on opposited sides (6, 7) of said seat (1) and being fixed to a support structure (4) for this latter.

4. A device as claimed in claim 3, characterized in that said appendix (23) is rigid with a first (18) of said rails (18, 19), said means (28) for engaging said connection element (24) are rigid with a second (19) of said rails (18, 19).

5. A device as claimed in claim 4, characterized in that said floor (8) is provided with at least one pair of support brackets (10, 12), said brackets (10, 12) being rigid with said floor (8), a first (10) of said brackets being provided with said housing (15), and the second (12) of said brackets being arranged for engagement by said connection element (24).

6. A device as claimed in claim 4 or 5, characterized in that said appendix is provided laterally to said first rail (18).

7. A device as claimed in claim 6, characterized in that said appendix (23) is constituted by an element in the form of metal plate bent to U-shape and welded to said first rail (18).

8. A device as claimed in one of the preceding claims, characterized in that said means (28) for engaging said connection element further comprise at least one third bracket (28) fixed laterally to said second rail (19) on that side thereof parallel and opposite the side which faces said appendix (23), said connection element (24) being constituted by a bolt (31) to pass through at least one hole (29) and said slot (30), these latter being respectively provided each in one of said second (12) and said third (28) bracket.

9. A device as claimed in one of the preceding claims, characterized in that said guide (5) is of plastics construction, said rail (18, 19) being constructed of metal plate and being provided with means (20, 21) to prevent said guide (5) withdrawing laterally and/or upwardly from said rail (18, 19).

## Patentansprüche

1. Halterungsvorrichtung für einen Sitz (1), insbesondere für einen Fahrzeugsitz, von der Art mit mindestens einer Längsführung (5) die fest und starr unter dem Sitz angebracht ist und mit mindestens einer Schiene (18, 19) welche Mittel zur Befestigung am Boden (8) aufweist, wo die Führung (5) parallel zur Schiene (18, 19) verläuft und verschiebbar an dieser angebracht ist, um den Sitz (1) am Boden (8) festzuhalten jedoch gleichzeitig zu ermöglichen, dass der Sitz (1) sich parallel zum Boden und einer vorzugsweisen Richtung parallel zur Schiene (18, 19) verschiebt, während die Befestigungsmittel mindestens einen starren Ansatz (23), der fest an der Schiene (18) angebracht ist, mindestens einen gegenüber dem Boden (8) festen Sitz (15) mit darin einschnappenden Ansatz (23) besitzt, wobei letzterer zur Einführung in den Sitz (15) vorgeformt ist und mindestens ein abmontierbares Anschlusselement (24) zur Verbindung der Schiene (19) mit dem Boden (8) sowie Mittel zur Blockierung dieser Anschlusselemente (24) aufweist, dadurch gekennzeichnet dass in Kombination dieser Sitz (15) aus einem im wesenlichen hohlen parallelflachen Gehäuse mit einer so vorgewählten Tiefe besteht und der Ansatz (23) senkrecht zur Schiene (18) verläuft und mindestens eine schiefe Ebene (26) aufweist die in das Gehäuse (15) eingezwängt werden kann, wobei die Mittel (28) zur Blockierung des Anschlusselementes (24) einen Schlitz (30) aufweisen der das seitliche Einstellen des Sitzes (1) senkrecht zur Führung (5) mit dem im Gehäuse (15) geführtem Ansatz ermöglicht.

2. Vorrichtung nach Anspruch 1, dadurch gekennzeichnet dass der Boden (8) im wesentlichen flach verläuft und Teil des Fahrzeugkörpers (9) ist.

3. Vorrichtung nach Anspruch 1 oder 2, dadurch gekennzeichnet dass sie zwei Führungen (5) verschiebbar in zwei dieser Schienen (18, 19) montierten Führungen (5) aufweist, wobei die Führungen (5) parallel untereinander verlaufen und unten sowie an den gegenüberliegenden Seiten (6, 7) des Sitzes (1) angebracht und an einer Halterungsstruktur (4) befestigt sind.

4. Vorrichtung nach Anspruch 4, dadurch gekennzeichnet dass der Ansatz (23) starr mit einer (18) der Schienen (18, 19) verbunden ist und dass die Mittel (28) zur Blockierung der Anschlusselemente (24) starr an der zweiten Schiene (19) befestigt sind.

5. Vorrichtung nach Anspruch 4, dadurch gekennzeichnet dass der Boden (8) mindestens ein Paar Tragbügel (10, 12) aufweist und dieses Bügel (10, 12) fest am Boden befestigt sind, wobei einer (10) dieser Bügel ein Gehäuse (15) besitzt und der zweite Bügel (12) dazu vorgesehen ist, das Anschlusselement (24) zu führen.

6. Vorrichtung nach Anspruch 4 oder 5, dadurch gekennzeichnet dass der Ansatz (23) seitlich an die erste Schiene (18) blockiert ist.

7. Vorrichtung nach Anspruch 6, dadurch gekennzeichnet dass der Ansatz (23) aus einem U-förmig gebogenem Stahlblech besteht und an die erste Schiene (18) angeschweisst ist.

8. Vorrichtung nach irgendeinem der vorhergehenden Ansprüchen, dadurch gekennzeichnet dass die Mittel (28) zur Befestigung dieser Anschlusselemente ausserdem mindestens einen dritten Bügel (28) aufweisen der seitlich an der zweiten Schiene (19) an seiner parallelen und dem Ansatz (23) gegenüberliegenden Seite befestigt ist, wobei das Anschlusselement (24) aus einem Bolzen (31) besteht, der durch mindestens eine Bohrung (29) und den Schlitz (30) läuft, wobei diese im zweiten und dritten Bügel geführt werden.

9. Vorrichtung nach irgendeinem der vorhergehenden Ansprüche, dadurch gekennzeichnet dass die Führung (15) aus Kunststoff und die Schiene (18, 19) aus Stahlblech bestehen und Mittel aufweisen (20, 21) um eine seitliche bzw. Bewegung nach oben der Führung (5) an dieser Schiene (18, 19) zu verhindern.

## Revendications

1. Dispositif support pour un siège (1), notamment pour un siège de véhicule à moteur, du type comportant au moins une glissière longitudinale (5) montée en dessous du siège (1) et solidaire de lui, et au moins un rail (18, 19) équipé de moyens pour le fixer sur un plancher (8), cette glissière (5) étant parallèle aux rails (18, 19) et étant logée à coulissement dans ces derniers afin de retenir le siège (1) sur le plancher (8) tout en lui permettant simultanément de se déplacer parallélement au plancher (8) dans une direction prédéterminée parallèle aux rails (18, 19), ces moyens de fixation comprenant au moins un appendice rigide (23) fixé rigidement sur le rail (18), au moins un logement (15) solidaire du plancher (8) et agencé pour coopérer avec l'appendice (23), ce dernier étant configuré pour être introduit dans le logement (15), au moins un élément de liaison démontable (24) pour relier le rail (19) au plancher (8) et des moyens pour coopérer avec cet élément de liaison (24), caractérisé en ce que, en combinaison, ce logement (15) est un logement parallélépipédique pratiquement creux d'une profondeur prédéterminée et que cet appendice (23) est perpendiculaire au rail (18) et comprend au moins une surface oblique (26) telle qu'elle peut être coincée dans le logement (15), les moyens pour coopérer avec l'élément de liaison (24) comprenant une fente (30) adaptée pour permettre d'ajuster le siège (1) latéralement perpendiculairement à la glissière, cet appendice (23) étant introduit à l'intérieur du logement (15).

2. Dispositif selon la revendication 1, caractérisé en ce que le plancher (8) est pratiquement plan et fait partie de la carrosserie (9) du véhicule.

3. Dispositif selon la revendication 1 ou 2, caractérisé en ce qu'il comporte deux glissières (5) montées à coulissement dans les deux rails (18, 19), ces glissières (5) étant parallèles l'une à l'autre et étant disposées en dessous du siège (1) et sur les côtés opposés (6, 7) de celui-ci et étant fixées à une structure support (4) pour ce dernier.

4. Dispositif selon la revendication 3, caractérisé en ce que cet appendice (23) est solidaire d'un premier rail (18), les moyens pour coopérer avec l'élément de liaison (24) étant solidaires du deuxième rail (19).

5. Dispositif selon la revendication 4, caractérisé en ce que le plancher (8) est équipé d'au moins une paire de ferrures supports (10, 12), ces ferrures (10, 12) étant solidaires du plancher (8), une première ferrure (10) comportant ce logement (15) et la deuxième ferrure (12) étant disposée pour coopérer avec l'élément de liaison (24).

6. Dispositif selon la revendication 4 ou la revendication 5, caractérisé en ce que cet appendice est prévu latéralement sur le premier rail (18).

7. Dispositif selon la revendication 6, caractérisé en ce que cet appendice (23) est constitué par un élément sous la forme d'une tôle métallique pliée en U et soudée sur le premie rail (18).

8. Dispositif selon l'une quelconque des revendications précédentes, caractérisé en ce que les moyens pour coopérer avec l'élément de liaison comprennent en outre au moins une troisième ferrure (28) fixée latéralement sur le deuxième rail (19) sur le côté de celui-ci parallèle et opposé au côté qui fait face à l'appendice (23), l'élément de liaison (24) étant constitué par un écrou (31) qui traverse au moins un trou (29) et la fente (30), ces derniers étant respectivement prévus chacun sur l'une des ferrures, la deuxième (12) et la troisième (28).

9. Dispositif selon l'une quelconque des revendications précédentes, caractérisé en ce que la glissière (5) est en matière plastique, et que le rail (18, 19) est en tôle métallique et est équipé de moyens (20, 21) pour empêcher la glissière (5) de s'échapper latéralement et/ou vers le haut du rail (18, 19).

Fig.5

Fig.4

Fig.3

Fig.1

Fig.6

Fig.2

2